# EUROPEAN PATENT SPECIFICATION

(11) **EP 3 315 536 B1**
(45) Date of publication and mention of the grant of the patent: **08.12.2021**
(21) Application number: 17198477.6
(22) Date of filing: 26.10.2017
(51) Int. Cl.: C08H 1/06, C08L 89/06

(54) **BIODEGRADABLE POLYMERIC DERIVATIVES**
BIOLOGISCH ABBAUBARE POLYMERDERIVATE
DÉRIVÉS DE POLYMÈRES BIODÉGRADABLES

(30) Priority: 26.10.2016 IT 201600108137
(43) Date of publication of application: 02.05.2018
(73) Proprietor: Sicit Chemitech S.p.A., 36072 Chiampo (VI) (IT)
(72) Inventor: CANDIDO, Manuela Cinzia, 36071 Arzignano VI (IT); NERESINI, Massimo Costantino, 36078 Valdagno VI (IT)
(74) Representative: de Benedetti, Jacopo

(56) References cited:
- EP-A1- 0 914 961
- EP-A1- 2 500 371
- WO-A2-2008/075279
- Momentive: "Product Selector", , 1 January 2012 (2012-01-01), XP055380636, Retrieved from the Internet: URL:http://mmr.mschem.com/miller/pdf/Helox y.pdf [retrieved on 2017-06-12]

## Description

The present invention relates to a process for the production of derivatized protein hydrolysates and/or derivatized gelatins and their use for obtaining materials and articles that are compostable, biodegradable and/or characterized by slow- or controlled-release of active substances, e.g. means for the protection of crops and disposable materials of daily use. The present invention also relates to the materials and articles obtained by said process.

It is known that hydrolyzed gelatins can be used in agriculture as fertilizers and biostimulants, being applied on the leaves or roots.

Chemically modified hydrolyzed proteins and gelatins are known to be used for obtaining substances and materials that can be employed in the plastics industry or for the production of other useful agricultural materials such as mulching cloths, disks, nets, greening fabrics, pots, containers for horticulture and floriculture, transplant containers, strings, and biodegradable capsules, for example those intended to contain seeds.

In particular, various processes are known in which a gelatin is reacted with a crosslinking or copolymerizing agent comprising oxyethylene or polyoxyethylene units in aqueous solution.

For example, US2003/0083389A01 describes a hydrogel comprising a polymer matrix to which a bifunctional poly (alkylene glycol) molecule is covalently bonded.

It is also known that a crosslinking or copolymerizing agent may consist of a mono or bifunctional compound suitable for reacting with functional groups present in the protein hydrolysate or gelatin.

For example, EP0914961 discloses a water-insoluble ink receptive coating comprising a gelatin, a water-insoluble quaternary cationic polymer which are crosslinked together by a multifunctional cross-linking agent to form a water-insoluble ink receptive coating layer for inkjet recording. In comparative Example 2, preparation of a coating formulation comprising gelatin, Heloxy Modifier 48 and water is described. This document does not disclose a step of reaction comprising heating the mixture for a determined time before obtaining the coating formulation.

WO2008075279 in the name of the same Applicant describes a method for derivatizing gelatin and protein hydrolysates comprising the reaction of such hydrolysates or gelatins with a compound of formula R-(OCH₂CH₂)ₓ-OR, wherein x is less than 250 and R is a specific organic residue comprising a double bond or an epoxide.

US5219564 describes copolymers of amino acids or peptide sequences and poly (alkylene oxides), for example polyethylene glycol, to obtain useful hydrogels such as drugs delivery systems and conductive materials.

Application CN103059318 describes gelatins that are derivatized with monofunctional or bifunctional epoxy compounds.

Application CN102726257 describes a sticky blend used for coating silk and cotton fibers and the fabrication of nonwoven fabric comprising gelatin, epoxy resin, glycerol, sodium silicate and a penetrating agent. The weight amount of epoxy resin here described is very high compared to that of the gelatin, resulting in a high cost of the resulting mixture.

However, the derivatized products obtainable by the above described processes are unsuitable for use in the field of agricultural or industrial materials, as they are characterized by a poor water stability.

JP2006274098 describes a gelatin gel obtained by dissolving a gelatin in a polyhydroxy alcohol, such as glycerol and propylene glycol, by allowing the thus obtained solution to settle and cool. A possible crosslinking agent is described, such as an aqueous or organic solution of glutaraldehyde or a bifunctional or polyfunctional epoxy compound such as glutaraldehyde and ethylene glycol diglutarate. The obtained gels are characterized by high transparency. However, due to the limited solubility of such gelatins in the solvents mentioned, they require large amounts of solvent, resulting in a high degree of flexibility and elasticity of the materials obtained with such gelatins. Water stability of the gelatines according to the above document is not tested nor considered.

EP0898973 describes a method for producing a crosslinked collagen material useful for biomedical use, comprising the reaction of an epoxy crosslinking agent with a collagen material. The reaction is carried out at acidic pH to react the carboxylic collagen groups with said epoxy crosslinking agent.

JPH02255888 describes an aqueous, crosslinked, high adhesion gelatin, usable in the medical preparation field and obtainable by reacting a mixture of an aqueous solution of a gelatin, a gelation retarder, and a crosslinking agent of the following formula: 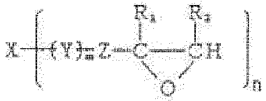 wherein X is a residue of a 2-6 carbon atom compound comprising 2-6 OH groups; Y is oxyethylene, oxypropylene or oxybutylene; Z is a (partially substituted) saturated hydrocarbon residue having 1 to 20 carbon atoms or an acyl group of a saturated (partially substituted) carboxylic acid having 1 to 20 carbon atoms; R₁ is H, methyl, ethyl, propyl or butyl; R₂ is H, a saturated hydrocarbon residue having 1 to 20 carbon atoms (partially substituted), an acyl group of saturated carboxylic acid with 1 to 20 carbon atoms (partially substituted), or a residual benzene (partially substituted) ; m is 1-500; and n is 2-6.

In this general formula there are included crosslinking agents comprising an alkyl chain comprising a plurality of oxygen atoms, in fact both the X and Y groups defined above necessarily comprise at least one oxygen atom each.

The crosslinked gelatins obtained with the agents described above are characterized by an aqueous consistency and high adhesive power and necessarily include gelation retarders. Therefore, such crosslinked gelatin cannot be used for the production of plastic materials or other useful agricultural materials for which a high water stability of the dried product is required and a limited bulge similar to that of the starting gelatin.

The object of the present invention is therefore to provide a process for obtaining a derivatized protein hydrolysate and/or a derivatized gelatin usable for obtaining biodegradable and compostable materials and articles and having improved water stability characteristics. The compostable materials of the present invention are preferably optimized so as to allow a controlled-release of the substances constituting it. Said object is achieved by a process for the production of derivatized protein hydrolysate and/or derivatized gelatins whose principal characteristics are specified in the first claim, while other features are specified in the remaining claims.

An advantage of the process according to the present invention is that it can be carried out in water in the absence of bases. In fact, due to the high reactivity of the compounds of formula I that are used in such process, the formation of derivatized protein hydrolysates and derivatized gelatins takes place at pH values that are compatible with those of the water solutions of protein hydrolysates and gelatins deriving from industrial production. In addition, unlike the known prior art products for which stability increases as the reaction pH increases, derivatized protein hydrolysates and derivatized gelatins obtained by the process according to the present invention at acidic pH of 5 and higher have a stability comparable to those obtained at basic pH. It is therefore possible to avoid adding bases that increase the unwanted salinity of the final product.

An advantage of derivatized protein hydrolysates and derivatized gelatins obtained by the process according to the present invention is that the materials into which they are incorporated have improved water stability and durability compared with those containing the protein hydrolysates and the derivatized gelatins known in the art.

Advantageously, in combination with other substances, the derivatized protein hydrolysates and derivatized gelatins obtained by the process according to the present invention allow the formation of materials having higher degradation resistance while maintaining long-term biodegradability and compostability. The water degradability characteristics of derivatized protein hydrolysates and derivatized gelatin are essential for their actual use for the production of consumer goods or as slow-release fertilizers. In particular, it is necessary that such derivatized protein hydrolysates and derivatized gelatins be present in the materials that contain them at low concentrations or are released slowly when such materials are used as constituents of containers for agriculture or as fertilizers. In fact, the administration of biologically active substances in high concentrations in agriculture could give rise to phytotoxicity phenomena. In addition, too fast degradation of the materials is undesirable if they are used, for example, in the preparation of ortho-flora nursery containers, since stability as a container is essential for use.

The materials according to the invention may contain considerably lower amounts of such derivatized protein hydrolysates and derivatized gelatines, resulting in significant economic advantage. Indeed, thanks to their water-stability characteristics, the derivatized protein hydrolysates and derivatized gelatines obtained by the process according to the present invention may be included in the materials in a quantity of less than 10%, for example 6-8% by weight over the finished product, obtaining a material that can be used for the preparation of large and commercial use objects, however biodegradable and compostable in a long period of time. On the contrary, the derivatized protein hydrolysates and derivatized gelatins known in the art must be included in the materials for agriculture in amounts of at least 25% by weight, with at least 10% derivatizing agent, with respect to gelatin or protein hydrolysate weight.

In addition, derivatized protein hydrolysates and derivatized gelatins obtained by the process according to the present invention can also be used as slow-release fertilizers in admixture with other substances, acting as protection from the degradation over time also of the substances used in the composition.

The derivatized protein hydrolysates and derivatized gelatins obtained by the process according to the present invention can also be used in formulations suitable for the preparation of container materials, which must be characterized by a modulated release over time of the constituent substances, so as to avoid phenomena of phytotoxicity.

The biostimulating nature of the substances released over time is evidenced by simple cultivation tests carried out with containers prepared with the materials containing derivatized gelatins according to the present invention. These tests have also demonstrated the complete degradation of the material used to prepare the containers that were partially broken before being earthed up with the plant to favour root growth.

Further advantages and features of the according to the present invention will become clear to those skilled in the art from the following detailed and non-limiting description of an embodiment thereof with reference to the attached drawings, wherein:
- Figure 1 shows the results of stability tests in water at 54 ° C, at various pH values, with a gelatin derivatized according to the state of the art;
- Figure 2 shows the results of stability tests in water at 54 ° C, at various pH values, with a derivatized gelatin obtained by the process according to the present invention;

- Figure 3 shows the results of stability tests in water at 54 ° C with a derivatized gelatin obtained by the process according to the present invention using various concentrations of derivatizing substance;
- Figure 4 shows the results of stability tests in water at 54 ° C with a gelatin derivatized according to the state of the art and containing salts;
- Figure 5 shows the results of stability tests in water at 54 ° C with a derivatized gelatin obtained by the process according to the present invention and containing salts;
- Figure 6 shows the results of stability tests in water at 54 ° C with a derivatised gelatin according to the state of the art and containing calcium carbonate;
- Figure 7 shows the results of stability tests in water at 54 ° C with a derivatized gelatin obtained by the process according to the present invention and containing calcium carbonate;
- Figure 8 shows the results of stability tests in water at room temperature, with a derivatized gelatin obtained by the process according to the present invention and containing a protein hydrolysate;
- Figure 9 shows the results of stability tests carried out at 54 ° C with composite materials formed from derivatized gelatins according to the invention and according to prior art; and
- Figure 10 shows the results of stability tests carried out at 54°C with composite materials formed from derivatized gelatins obtained by the process of the present invention at 45°C and at 85°C.

In the present specification and in the figures, the acronym PEG-DGE means poly (ethylene glycol) diglycidyl ether.

According to the present invention, a process for the production of derivatized protein hydrolysates and / or derivatized gelatins comprises a step of reacting a protein hydrolyzed, a gelatin and / or a mixture thereof with a compound of formula I: 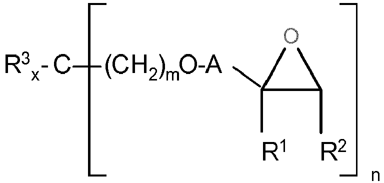 wherein: x is 0 or 1; m is an integer from 1 to 6; A is methylene or substituted methylene; R¹, R² and R³, independently from each other, are selected from the group consisting of hydrogen and C₁-C₆ saturated alkyl; and n is an integer from 3 to 4.

This reaction step can be carried out in water, or water mixtures with other solvents such as alcohol; or in alcohol, for example glycerine.

Preferably, said reaction step is carried out in water at a pH of 5 or higher than 5.

In this description and in the claims, the term "protein hydrolysate " refers to a product comprising a mixture of amino acids and peptides obtained by chemical or enzymatic hydrolysis of an animal or vegetable protein source. If this product has gelatinous properties, it is called a gelatin. Gelatin can be characterized by Bloom value, a unit of measure of its strength. The Bloom value is defined as the weight in grams needed by a specified plunger having diameter of 12,7 mm to depress the surface of the gelatin by 4 mm, wherein the gelatin has been previously dissolved in water to a concentration of 6.67% w / w, and allowed to rest for 20 hours at 10 ° C.

In particular, in the process of the present invention a protein hydrolisate, a gelatin and / or a mixture thereof can be first solubilized in water. Preferably, the pH of the solution of protein hydrolysate, gelatin and / or mixture thereof in water is higher than 5; more preferably is greater than 6; still more preferably the pH is greater than 7.

The amount of protein hydrolysate, gelatin and / or mixture thereof is preferably such as to provide a 30-35% by weight solution or dispersion. In some cases, higher concentrations of hydrolysed protein, gelatin and / or their mixture may result in a too fast solidification.

Then, said compound of formula I is added to form a reaction mixture in water. Said reaction step is preferably carried out at a temperature of at least 40°C and a period of time of at least 1 hour. Preferably, said temperature is between 40 ° C and 90 ° C. More preferably, the reaction step is carried out at a temperature between 40 ° C and 70 ° C. According to a preferred embodiment, the reaction temperature is between 45 ± 2 ° C and 50 ± 2 ° C.

According to an embodiment of the invention, in formula I above, x is equal to 0 and n is equal to 4.

According to one embodiment of the invention, in formula I above, m is equal to 1 or 2.

According to a embodiment of the invention, R¹ and R² independently of one another are selected from the group consisting of hydrogen, methyl, ethyl, propyl, isopropyl, n-butyl, terbutyl.

According to a form of the invention, Group A is methylene or methylene substituted with methyl, ethyl, propyl, isopropyl, n-butyl, terbutyl.

According to a form of the invention, said compound of formula I is pentaerythritol tetraglycidyl ether. 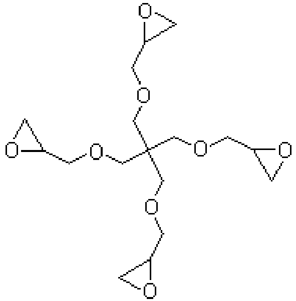 Pentaerythritol tetraglycidyl ether

Preferably, said reaction step involves heating the reaction mixture to about 45 ° C for 6 hours. In fact, all other conditions being equal, the product obtained by applying the said reaction conditions was more stable than a product obtained with a reaction time of about 1.5 hours and a reaction temperature of about 85 ° C.

Subsequently, in the process according to the present invention, a selected substance selected from the group consisting of fillers, reinforcing additives, lubricants, stabilizers, dyes, compacting agents, aggregating agents can be added to said reaction mixture. Any addition of such substances should be carried out after the reaction between said protein hydrolysate, gelatin and / or mixture thereof and said compound of formula I occurs, i.e., after the solidification begins.

For example, some salts may be added that allow for high stability, such as calcium carbonate, calcium sulphate, salts used as fertilizers such as iron sulphate, potassium phosphate and their hydrates, which do not have gelation retarder effect.

Other substances that can be added to the reaction mixture, after the reaction has taken place, to improve the process according to the present invention and / or the product obtainable by this process are for example: fillers such as vegetable flours, wood fibers, animal flours; lubricants such as fats, oils, starches, alcohols, polyols, for example glycerine; substances having a specific fertilizing action, for example organic substances such as humic acids, urea, dry blood, hair and meat flours; salts of micro and macroelements, such as iron salts, preferably iron sulphate; manganese salts preferably manganese sulfate or chloride; zinc salts preferably zinc sulfate or chloride; copper salts, preferably copper sulphate; magnesium salts, preferably magnesium chloride or magnesium sulphate; cobalt salts preferably cobalt sulfate; molybdate preferably of sodium and / or ammonia; boric acid; tetraborate or octaborate preferably of sodium; potassium and phosphorus salts, preferably potassium phosphate; calcium salts, preferably calcium carbonate; and sulfur, preferably as calcium sulfate; industrial products and by-products such as ligninsulfonate; products and / or by-products of the canning industry and the agricultural industry such as tomato peels, beet pulp, sunflower, bran, coarse flour, vegetable processing residues, for example of flaxseed.

Mixing with any additional mentioned above substances is carried out by known methods to those skilled in the art. According to one embodiment of the invention, the process comprises a step of resting the mixture as obtained from the reaction phase and subsequent addition of one or more of the aforementioned substances. The resting period consists in allowing the reaction mixture to rest for at least 1 hour.

According to one embodiment of the invention, at the beginning of solidification, the mixture is formed in a layer and subsequently cut into pieces, for example dices or strips, to be used as such or mixed with other ingredients for subsequent moulding, with or without prior extrusion.

According to an embodiment of the invention, after forming and moulding, the process may further comprise a drying step at room temperature and/or an optional drying step at a temperature preferably above 50°C. The same drying systems generally used for animal gelatins can be used, for which known and consolidated technologies are used.

The material comprising the derivatized gelatin, possibly in combination with other substances and additives, can be maintained in the solid state even without drying and used as such by the formulators or the printers for the manufacture of different products and / or articles for the realization of which may be expected to be mixed with other active substances for purposes of health or plant health; or with additives and other substances of interest for specific applications such as the preparation of articles or products of use.

In the present description and in the claims, the term " product of use " means any article having a shape and having a particular function, such as packaging products, such as plant nursery containers; clothing accessories, such as watch bracelets; toys; articles and materials intended for furnishing, such as pencil holders, magazine racks.

According to an embodiment of the process according to the present invention, said protein hydrolysate and / or gelatin are obtained from by-products of slaughterhouses or tanning industry, obtained indifferently before or after the tanning step or from by-products and / or products of vegetable origin, agro-industrial waste, byproducts and / or products of animal origin.

The present invention also relates to a derivatized protein hydrolysate and / or derivatized gelatin obtainable by the process according to the present invention.

Furthermore, the present invention relates to a fertilizing and / or biostimulating and / or plant-based material or product comprising a derivatized protein hydrolysate and / or a derivatized gelatin obtainable by the process according to the present invention.

The derivatized protein hydrolysate and / or the derivatized gelatin obtainable by the process according to the present invention can be used as slow release fertilizer or in combination with other substances, such as nutrients, to form a material suitable for allowing controlled release of all the substances in the composition.

For example, the derivatized protein hydrolysate and / or the derivatized gelatin obtainable by the process according to the present invention can be used as a component of slow release granules, pellets or flakes containing fertilizing and / or biostimulating agents.

In particular, the present inventors have carried out experimental trials that have confirmed the possibility of preparing materials according to the present invention comprising P₂O₅ and K₂O in different ratios and also comprising salts of microelements and various derivatized gelatin contents according to the invention. A product comprising a derivatized gelatin according to the present invention was prepared and having a P₂O₅ / K₂O (referred to the dry substances) content in the range of 5 to 0.5.

The various materials obtained, including a derivatized gelatin according to the invention and microelements with a different content of salts and organic nitrogen, were extruded with a 27 mm strand, left in the form of cylinders of different length, dried at room temperature and subsequently in stove at 70 and 105 ° C for different times. These products have been tested both in the field and in containers giving excellent results in terms of fertility and resistance to disintegration.

In addition, the derivatized protein hydrolyzed and / or the derivatized gelatin obtainable by the process according to the present invention can be used as a seed coating and as fertilizers, and also as micro-encapsulation agents of active substances for use on the leaves or roots.

Materials including derivatized protein hydrolysate and / or derivatized gelatine obtainable by the process according to the present invention are suitable for processing as traditional plastics, i.e. with an extrusion process and subsequent shaping and / or molding for the preparation of pots, containers, trays, strings, cans used in agriculture or other products of use, such as household objects, to which the material according to the present invention confers the biodegradability property.

The invention is further illustrated by means of the following non-limiting examples.

The stability tests referred to in the examples are carried out as follows.

The tested material is placed in water, at the indicated temperature (room temperature or 54°C, as indicated in the examples), in a Becker glass container or Sovirel glass bottle. The container or bottle is closed and left at the indicated temperature.

Periodically, all the water in the container or bottle is taken, dried in a Petri dish at 105°C and the dry residue is measured.

The residual undissolved material left in the container is placed in the same amount of clean water and left at the indicated temperature.

### Example 1

For a test titled 121L, 1050g of water were added to 450g of commercial animal gelatin for alimentary use having Bloom index 90 at a temperature between 45 and 50° C.

Upon dissolution, the pH was determined to be 5.59. Subsequently, the solution was additioned with 31.5 g of poly (ethylene glycol) diglycidyl ether at a temperature of 45 ° C.

The same procedure, same conditions and quantities of reagents were used for other tests that differed only in that the solution was additioned with the below indicated substances, prior to the addition of poly (ethylene glycol) diglycidyl ether, namely:
- sample 123 L was additioned with sodium hydroxide (NaOH) to pH 9.74;
- sample 125 L, was additioned with hydrochloric acid (HCl) to pH 4.00
- sample 127 L was additioned with sodium hydroxide (NaOH) to pH 7.75.

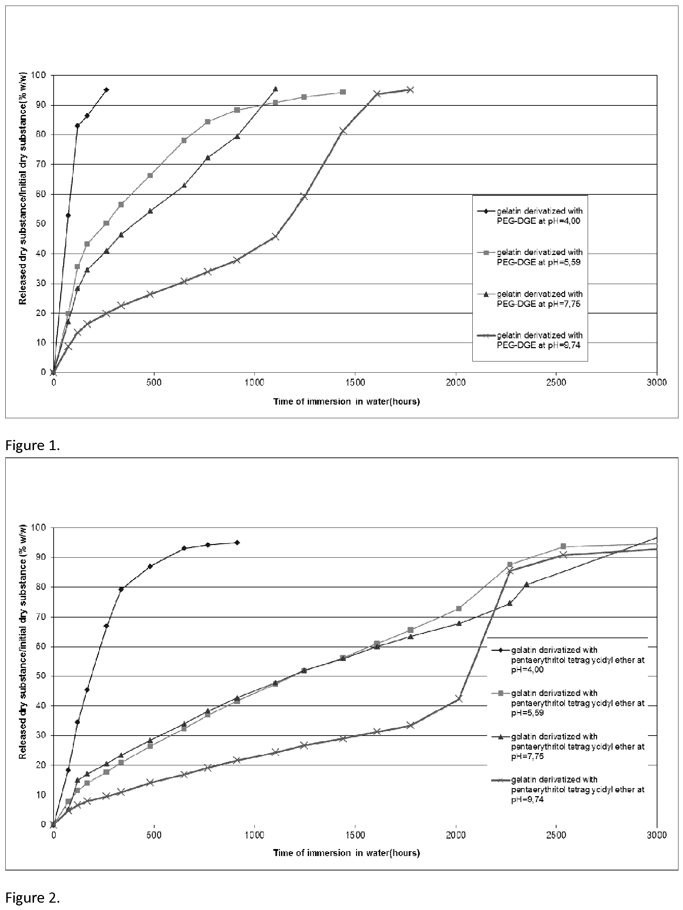

The results of the stability tests in water at 54°C, after drying for one day, reducing in pads of 5 mm size and subsequently drying at room temperature for two days and then in a oven at 105 ° C for 8 hours, are shown in Figure 1.

### Example 2

For a test titled 122 L, 1050g of water at 45-50°C were additioned to 450g of commercially-produced animal gelatin with Bloom index 90.

Upon dissolution, the pH was determined to be 5.59. After the solution, brought to a temperature of 45 ° C, was additioned with 31.5 g of pentaerythritol tetraglycidyl ether.

The same procedure, same conditions and quantities of reagents were used for other tests that differed only in that the solution was additioned with the below indicated substances, prior to the addition of pentaerythritol tetraglycidyl ether, i.e.:
in test 124 L sodium hydroxide (NaOH) was added to pH 9.74;
in test 126 L hydrochloric acid (HCl) was added to pH 4.00; is
in test 128 L, sodium hydroxide (NaOH) was added to a pH of 7.75.

The results of the stability tests in water at 54 ° C after drying for one day, reducing in pads of 5 mm size and subsequent drying at room temperature for two days and then in a oven at 105 ° C for 8 hours, are shown in Figure 2.

### Example 3

For a test titled 93 L, to 700g of commercial animal gelatin for alimentary use with 90 Bloom index were added 700g of water at 45-50 ° C.

Upon melting, 21 g of pentaerythritol tetraglycidyl ether (i.e. in 7% of the amount of gelatin) were added. The reaction was allowed to proceed for 6 hours at 45 ° C.

The same procedure, the same conditions and quantities of reagents were used for other tests that differed by the amount of added pentaerythritol tetraglycidyl ether, always referred to as the quantity by weight with respect to the starting gelatin, that is:
in test 95 L 5% pentaerythritol tetraglycidyl ether were added;
in Test 96 L 3% pentaerythritol tetraglycidyl ether were added;
in test 92 L 1% pentaerythritol tetraglycidyl ether were added.

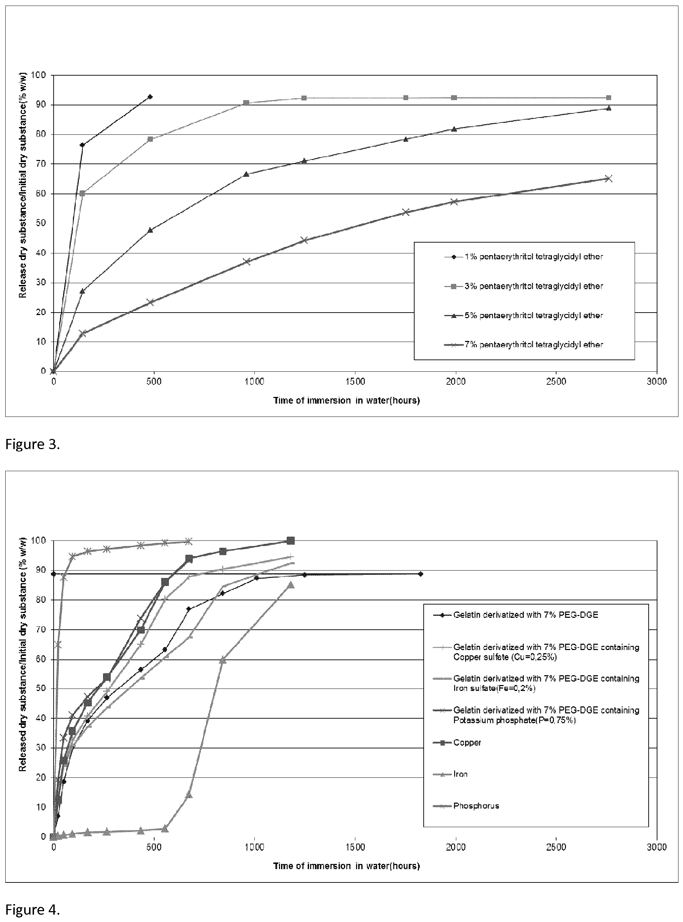

The results of the stability tests in water at 54 ° C after drying for one day, size reduction to 3 mm and drying at 40 ° C for two days and then in an oven at 105 ° C for 18 hours, are shown in Figure 3.

### Example 4

1000g of gelatin were obtained by hydrolysis of 2000 g of scunning residues from leather chromium tanning, by treatment with lime in amount of 7% w/w with respect to scunning residues and 8000 g of water at 70 ° C for 1 hour, filtration, calcium precipitation, filtration and concentration. The gelatin had a dry residue of 35% and was characterized by a Bloom index of 35 measured at 10 ° C at the concentration of 6.67% w/w. 24.5 g of pentaerythritol tetraglycidyl ether were added to this gelatin. The solution was left at 45 ° C for 6 hours. The obtained product, named 91L, was spread on special containers, allowed to rest for a few hours, allowed to dry on trays at room temperature for several days and then for 4 hours in oven at 105 ° C. The obtained product was characterized by a complete degradation in water in 34 days.

### Example 5

1050g of water at 45-50 ° C were added to 450g commercial animal gelatin for alimentary use with Bloom index 103. After dissolution, at a temperature of 45 ° C, 31.5 g of poly (ethylene glycol) diglycidyl ether were added. After 6 hours 0.3g of copper sulfate pentahydrate dissolved in 20 g of water were added to 100g of this solution.

The obtained product, named 141 L, was laid with 10 mm thickness on suitable containers, allowed to rest for a few hours, cut in dices of about 4 mm side and dried at room temperature for several days and then for 4 hours in an oven at 105 ° C. The material immersed in water at 54 ° C quickly released the copper as shown in Figure 4.

### Example 6

1050g of hot water at 45-50 ° C were added to 450g commercial animal gelatin for alimentary use with Bloom index 103. After dissolution, at a temperature of 45 ° C, 31.5 g of pentaerythritol tetraglycidyl ether were added. After 6 hours, 0.3 g of copper sulfate pentahydrate dissolved in 20 g of water were added to 100g of the solution thus obtained,.

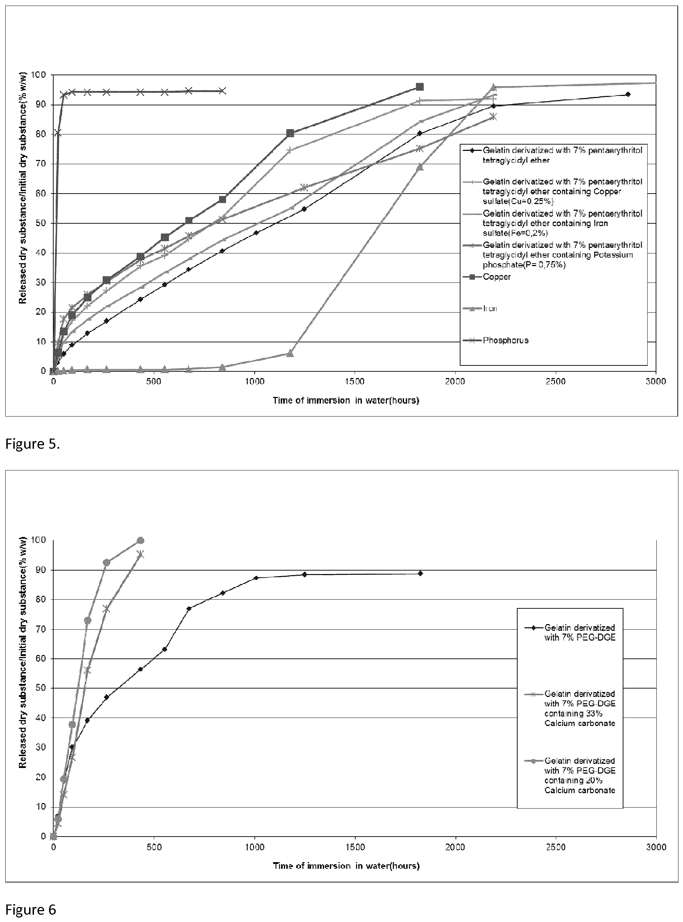

The obtained product, named 154 L, was laid with 10 mm thickness on special containers, allowed to rest for a few hours, cut in dices of approximately 4 mm side and dried at room temperature for several days and then for 4 hours in a oven 105 ° C. The material immersed in water at 54 ° C retained copper as shown in Figure 5.

### Example 7

450g commercial animal gelatin for alimentary use with Bloom index 103 was additioned with 1050g of water at 45-50 ° C. Upon dissolution at 45 ° C, 31.5 g of poly (ethylene glycol) diglycidyl ether were added. After 6 hours, 0.3 g of ferrous sulfate heptahydrate dissolved in 20 g of water were added to 100g of solution.

The obtained product, named 142L, was laid on special containers, allowed to rest for a few hours, cut into dices of approximately 4 mm side and dried at room temperature for several days and then for 4 hours in an oven at 105 ° C. The obtained material immersed in water began quickly to release iron after 20 days of immersion in water at 54 ° C, as shown in Figure 4.

### Example 8

1050g of water at 45-50 ° C were added to 450g commercial animal gelatin for alimentary use with Bloom index 103. Upon dissolution at 45°C, 31.5 g of pentaerythritol tetraglycidyl ether were added. After 6 hours 0.3 g of ferrous sulfate heptahydrate dissolved in 20 g of water were added to 100g of solution.

The obtained product, referred to as 155L, was spread in 10 mm thickness on special containers, allowed to rest for a few hours, cut into about 4 mm dices and dried at room temperature for several days and then for 4 hours in an oven at 105 ° C. The material immersed in water began to slowly release iron after 29 days of immersion in water at 54 ° C as shown in Figure 5.

### Example 9

1050g of water at 45-50 ° C were added to 450g commercial animal gelatin for alimentary use with Bloom index 103. Upon dissolution, at a temperature of 45 ° C, 31.5 g of poly (ethylene glycol) diglycidyl ether were added. After 6 hours, 2 g of 30% potassium phosphate solution was added to 100g of the solution.

The obtained product, named 143 L, was laid in 10 mm thickness on special containers, allowed to rest for a few hours, cut into about 4 mm dices and dried at room temperature for a few days and then for 4 hours in an oven at 105 ° C. The material immersed in water at 54 ° C retained potassium phosphate as shown in Figure 4.

### Example 10

1050g of water at 45-50 ° C were added to 450g commercial animal gelatin for alimentary use with Bloom index 103. Upon dissolution, at a temperature of 45 ° C, 31.5 g of pentaerythritol tetraglycidyl ether were added. After 6 hours, 2 g of 30% potassium phosphate solution was added to 100g of solution.

The obtained product named 156 L was spread on special containers, allowed to rest for a few hours, cut into about 4 mm dices and dried at room temperature for several days and then for 4 hours in an oven at 105 ° C. The material immersed in 54 ° C water retains potassium phosphate, as shown in Figure 5, much more efficiently than the analogue prepared with poly (ethylene glycol) diglycidyl ether.

### Example 11

1050g of water at 45-50 ° C were added to 450g commercial animal gelatin for alimentary use with Bloom index 103. After dissolution, at a temperature of 45 ° C, 31.5 g of pentaerythritol tetraglycidyl ether were added.

After 6 hours, 200 g of solution were additioned with 60 g of calcium carbonate in small successive additions.

The obtained product, named 129L, was laid in a thickness of 10 mm on special containers, allowed to rest for a few hours, cut into about 4 mm dices and dried at room temperature for several days and then for 4 hours in an oven at 105 ° C . The product immersed in water and kept at 54 ° C disintegrated in amount of 50% after 59 days and completely disintegrated after 66 days. The same product left in water at room temperature lost 20% of its initial weight in a time of 8 months.

The same preparation was carried out by replacing calcium carbonate with calcium sulfate (130L product). The product immersed in water and maintained at 54 ° C disintegrated in amount of 50% after 43 days and completely disintegrated after 52 days. The same product left in water at room temperature lost 20% of its initial weight in a time of 8 months.

### Example 12

1050g of water at 45-50 ° C were added to 450g commercial animal gelatin for alimentary use with Bloom index 103. After dissolution 31.5 g of poly (ethylene glycol) diglycidyl ether were added at 45 ° C. After 6 hours, 15 g of calcium carbonate suspended in 35 g of water were added to 100 g of solution.

The resulting product, named 139L, containing 33% calcium carbonate with respect to the dry material, was laid in 10 mm thick on special containers, allowed to rest for a few hours, cut into about 4 mm dices and dried at room temperature for several days and then for 4 hours in an oven at 105 ° C.

The test was repeated in the same manner but by adding a quantity of calcium carbonate and water equal to half of the above mentioned, making a product (product 140L) containing 20% of calcium carbonate with respect to the dry material.

The results of the stability tests of these materials in water at 54 ° C are shown in Figure 6.

### Example 13

1050g of water at 45-50 ° C were added to 450g commercial animal gelatin for alimentary use with Bloom index 103. After dissolution 31.5 g of pentaerythritol tetraglycidyl ether was added at 45 ° C. After 6 hours, 15 g of calcium carbonate suspended in 35 g of water were added to 100 g of solution.

The obtained product, named 152L, containing 33% calcium carbonate with respect to the dry material, was laid in 10 mm thickness in special containers, allowed to rest for a few hours, cut into about 4 mm dices and dried at room temperature for a few days and then for 4 hours in an oven at 105 ° C.

The test was repeated in the same manner but by adding a quantity of calcium carbonate and water equal to half the above mentioned, to obtain a product (product 153L) containing 20% of calcium carbonate with respect to the dry material.

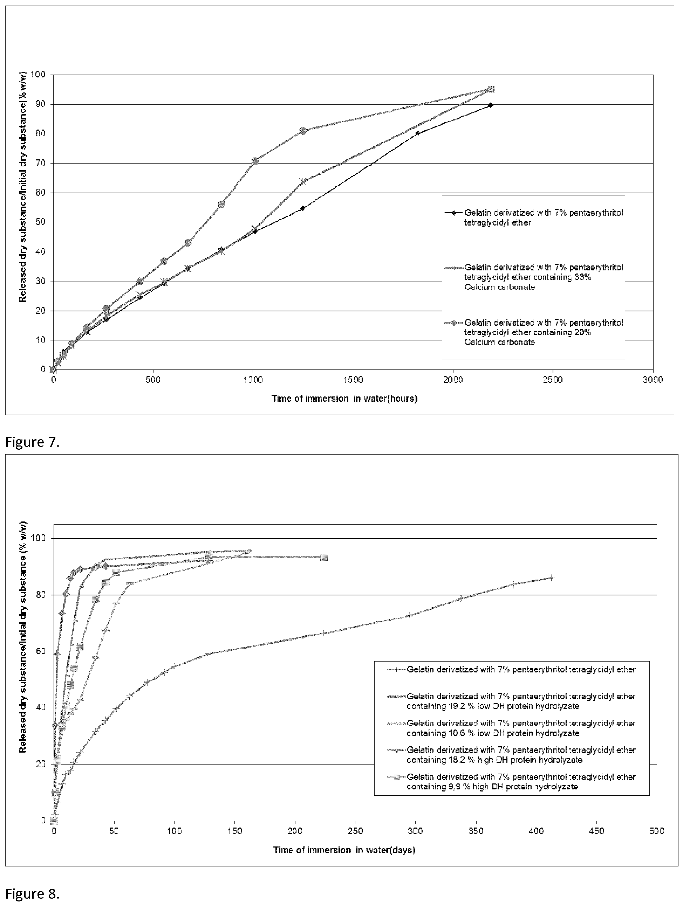

The results of the stability tests of these materials in water at 54 ° C are shown in Figure 7. The data show that the stability of these materials is very high compared to the analogue prepared with poly (ethylene glycol) diglycidyl ether.

### Example 14

1400g of water at 45-50 ° C were added to 600g of commercial animal gelatin with Bloom index 56. After dissolution, 42.66 g of pentaerythritol tetraglycidyl ether were added at 45 ° C. After 6 hours, 15.93 g of protein hydrolysate with 10.5% organic nitrogen, 1.5% amine nitrogen and 66.6% dry material (referred to as low DH = degree of hydrolysis) were added to 147.57g of solution.

The obtained product, named 53L, containing 19.2% protein hydrolysate with respect to the dry material was laid in 10mm thickness in suitable containers, allowed to stand for a few hours, cut into about 4mm dices and dried at room temperature for one week and then for 4 hours in an oven at 105 ° C.

The test was repeated in the same manner, but adding to 146.72 g of derivatized gelatin solution 7.84 g of protein hydrolysate by producing a product (54L) containing 10.6% of protein hydrolysate with respect to the dry material.

The results of the stability tests of these materials in water at 54 ° C are shown in Figure 8. The data show that by modifying quantity and degree of hydrolysis may result in different release curves.

### Example 15

1400g of water at 45-50 ° C were added to 600g of commercial animal gelatin with Bloom index 56. After dissolution, 42.66 g of pentaerythritol tetraglycidyl ether were added at 45 ° C. After 6 hours, 15.95 g of protein hydrolysate characterized by 10.5% organic nitrogen, 3.0% amine nitrogen and 66.6% dry material (referred to as high DH= degree of hydrolysis) were added to 158.91 g of solution.

The obtained product, named 55 L, containing 18.2% of protein hydrolysate with respect to the dry material, was laid in 10 mm thick on suitable containers, allowed to rest for a few hours, cut into dices of approximately 4 mm side and dried at room temperature for one week and then for 4 hours in an oven at 105 ° C.

The test was repeated in the same manner, but adding 7.92 g of protein hydrolysate to 160.51 g of derivatized gelatin solution by producing a product (product 56L) containing 9.9% of protein hydrolysate with respect to the dry material.

The results of the stability tests of these materials in water at 54 ° C are shown in Figure 8. The data show that acting on quantity and degree of hydrolysis may result in different release curves.

### Example 16

1050g of water at 45-50 ° C were added to 450g commercial animal gelatin for alimentary use with Bloom index 103. After dissolution, 31.5 g of pentaerythritol tetraglycidyl ether (7% versus gelatin weight) were added at 45 ° C. After 6 hours, 31.32 g of sulfonated lignin in liquid solution were added to 210.16 g of solution.

The obtained product, named 167 L, was spread in 10 mm thickness on special containers, allowed to rest for a few hours, cut into dices of about 2 mm side and dried at room temperature for several days and then for 4 hours in an oven at 105 ° C.

The product immersed in water and maintained at 54 ° C disintegrated in amount of 50% after 42 days and completely disgregated after 72 days. The same product left in water at room temperature lost 40% of its initial weight over 153 days. The product (166L), prepared in the same manner as the product 167 L, but without lignin sulfonate, lost 50% of the mass during the same period.

The same procedure was carried out using the same gelatin, but using 5% of pentaerythritol tetraglycidyl ether compared with the weight of gelatin, showed the possibility of creating water-stable products improved with respect to the product without lignin-sulfonate, with particular reference to a ratio between derivatized gelatin and lignin sulfonate between 8 and 12. The product named 167 L prepared in the same manner as product 166 but characterized by a ratio of gelatin to lignin sulfonate equal to 9 yielded 8.5% dry matter after 57 days while derivatized gelatin (171 L) containing no lignin sulfonate lost 11% of its initial weight. These data suggests that the derivatized gelatin can be further stabilized.

### Example 17

1050g of hot water was added to 450g commercial animal gelatin for alimentary use with Bloom index 103 at 45-50 ° C. After dissolution at 45 ° C, 31.5 g of pentaerythritol tetraglycidyl ether were added. After 6 hours, 20.88 g of wood flour were added to 209.16 g of solution.

The obtained product, referred to as 170 L, was laid in 10 mm thickness on special containers, allowed to rest for a few hours, cut into dices of about 4 mm side and dried at room temperature for a few days and then for 4 hours in an oven at 105 ° C.

The product, immersed in water and maintained at 54 ° C, disgregated in amount of 50% after 42 days and completely disgregated after 72 days. The same product left in water at room temperature lost only 7% of its initial weight in a time of 153 days. The derivatized and dried gelatin without additives (164L) lost at the same time 50% of the mass. The derivatized gelatin is therefore made more stable in water by adding wood fiber.

### Example 18

1050g of water at 45-50 ° C were added to 450g commercial animal gelatin for alimentary use with 90 degrees bloom. After melting at 45 ° C, 31.5 g of pentaerythritol tetraglycidyl ether were added. After 6 hours, different amounts of glycerol were added to portions of derivatized gelatin solution, thus obtaining different mixtures having different gelatin / glycerol ratios (products 36L-42L), thus proving that that, with a glycerol / gel ratio of 0.80-1.20, solutions that are can be easily taken off the molds can be obtained.

### Example 19

For test 433, with final 8.15% of functionalized gelatin dry substance, 600g of commercially available gelatin with Bloom index 103 were dissolved in 2400 g of water at 45-50 ° C. After dissolution, 42 g of pentaerythrol tetraglycidyl ether were added and allowed to react at 45 ° C for 6 hours. The resulting solution was added to a mixture consisting of 2800g of wood flour, 2800g of sunflower flour and 400g of carbonate calcium, and kneaded.

From the various tests performed on samples prepared in limited quantities and containing derivatized gelatin, like for test 433, and variable amounts of glycerin as shown in the following tables 1 and 2, it was concluded that in the case of a gel / glycerin ratio of about 1, for 8% (dry/dry) of functionalized gelatin content, it is possible to obtain considerable stability in water even if the product is not dried at 105 ° C.

**Table 1**

| Test | gel 30% | glycerol (g) | water (g) | wood flour (g) | sunflo wer flour (g) | Calcium carbonate (g) | Calcium sulfate (g) | Dry substance in the finished product (g) |
|---|---|---|---|---|---|---|---|---|
| 442 | 25 | 7 | 10 | 27 | 27 | 5 | | 72,77 |
| 448 | 25 | 7 | 10 | 27 | 27 | 0 | 5 | 76,56 |
| 451 | 50 | 7 | 0 | 27 | 27 | 5 | | 69,83 |

**Table 2**

| Test | Recovered dry mass as unique body after 45 days in water (% initial dry substance) | | |
|---|---|---|---|
| | dried at RT | dried for 4 h at 105°C | dried for 2 h at 105°C |
| 442 | 22,05 | 18,82 | 37,38 |
| 448 | 33,08 | 37,01 | 38,72 |
| 451 | 26,56 | 29,49 | 29,05 |

10 kg of product 433 was then made by using the same reagents and preparation methods as above. Tests of extrusion, jar molding, drying at room temperature and subsequent drying at 105 ° C were carried out. The results of these tests are shown in Table 3 below:

**Table 3**

| Test | Gel funct (dry/dry%) | Glycerol (dry/dry%) | | Wood flour (dry/dry%) | | Sunflower flour (dry/dry%) | | Calcium carbonate (dry/dry%) | | Gypsum (dry/dry%) |
|---|---|---|---|---|---|---|---|---|---|---|
| 433 | 8,15 | 10,33 | | 38,04 | | 38,04 | | 5,43 | | 0 |
| 434 | 15,08 | 9,55 | | 35,18 | | 35,18 | | 5,03 | | 0 |
| 442 | 10,38 | 9,69 | | 37,37 | | 37,37 | | 5,19 | | 0 |
| 457 | 8,15 | 10,33 | | 38,04 | | 38,04 | | 0 | | 5,43 |
| | continuation Table 3 | | | | | | | | | |

| Test | Moulding mark | | Stacking up mark | | Material mark | | Jar mark | | Average mark | |
|---|---|---|---|---|---|---|---|---|---|---|
| 433 | 9,0 | | 7,0 | | 6,0 | | 8,5 | | 7,6 | |
| 434 | 10,0 | | 8,0 | | 9,0 | | 9,0 | | 9,0 | |
| 442 | 8,0 | | 9,0 | | 5,0 | | 6,0 | | 7,0 | |
| 457 | 8,5 | | 8,0 | | 4,0 | | 8,0 | | 7,1 | |

In Table 3, the moulding mark refers to the ease of extracting the jar from the mold, the mark on stacking refers to the deformability of the material after molding with the possible difficulty of stacking, the mark on the material generally refers to the behavior during the moulding stage, the mark on the jar refers to the tendency to form cracks and surface quality. The moulding tests have pointed out that a further reduction in glycerol can actually be effected. With subsequent tests it has been possible to verify that glycerin is preferably less than 10% by weight to avoid low flow problems during extrusion and release at moulding stage.

Jars containing more gelatin are less fragile on the edges.

Water stability tests showed that the jars of tests 433 and 434 were the most stable for up to 21 days, losing only 12-13% of the substance, remaining intact while slightly swelling. Test 457 jar, while losing more substances during immersion (2-3% more than tests 433 and 434) remains structured up to 25 days.

### Example 20

For test 462, characterized by a final content of derivatized gelatin of 8.84% with respect to the dry substance, 31 g of commercially available 30% aqueous gelatine solution, characterized by Bloom index 56 measured on solutions of 12.5% w / w at 10 ° C, was reacted with an of 7% amount of pentaerythrol tetraglycidyl ether with respect to the mass of gelatin. To the still hot mass at 45 ° C, 9 g of glycerin and 10 g of the solution consisting of 11.95 g of potassium phosphate dissolved in 40 g of water were added.

The solution was added to a mixture consisting of 35 g of wood flour, 35 g of sunflower meal and 5 g of calcium carbonate and it was kneaded. In small portions, the rest of the potassium phosphate solution was subsequently added.

This homogenized mixture, after having been grinded, compacted after rapid heating at 37-40 ° C and dried at room temperature and then at 105 ° C for 24 hours, proved to be highly water-resistant in comparison with formulations containing no potassium salts; in spite of its a porous surface, it retains its shape, even id reduced, for 120 days, and it was completely disgregated after 135 days.

### Example 21

For product 487 characterized by a final content of gelatin functionalized of 24.94% with respect to the dry substance, 100 g of 30% commercially available gelatin solution, characterized by Bloom index 103, were reacted with a 7% amount of pentaerythrol tetraglycidyl ether with respect to the mass of gelatin. To the still hot mass at 45 ° C, 6.44 g of glycerin and 5 g of 45% lignin-sulfonated water solution were added.

The solution was added to a mixture consisting of 34.81 g of wood flour, 34.81 g of sunflower flour and 5 g of sulfate calcium and it was kneaded. In small successive portions, 10 g of potassium phosphate salts were added.

This mixture was homogenized with spice mill, compacted after rapid heating at 37-40 ° C and dried at room temperature and then at 105 ° C for 24 hours, and it proved to have a water resistance comparable to the formulations with the equivalent amount of glycerin.

### Example 22

For preparing product 518, characterized by a final content of functionalized gelatin of 27.09% with respect to the dry substance, 100 g of 30% aqueous commercial gelatin solution with Bloom index 103 were reacted with the amount of pentaerythrol tetraglycidyl ether of 7 % relative to the mass of gelatin. To the still hot mass, at 45 ° C, 10.44 g of calcium lignin sulfonate in aqueous solution, that is sold under trade name Borrement CA containing 45.6% of dry material, were added.

The solution was added to a mixture consisting of 35 g of wood flour, 35 g of sunflower flour and 6 g of calcium carbonate and it was kneaded.

This mixture was homogenized with spice mill, compacted after rapid heating at 37-40 ° C and dried at room temperature and then dried at 105 ° C for 24 hours. After 24 days the water solubilized part was 17% compared to the initial weight, comparable to the materials containing glycerin. Compared to the other tests, stability in water after 24 days is considerably higher.

### Example 23

A commercial gelatin having Bloom index 103 in 30% aqueous solution was reacted at 45 ° C for 6 hours with a derivatizer I in amount of 7% with respect to the weight of gelatin. The mixture was then dried at room temperature for one week and then dried at 105 ° C for 18 hours.

Three samples were prepared, using as a derivatizer I:
- polyethylene glycol diglycidyl ether (PEG-DGE): gelatin G2 (comparison example);
- trimethylpropane triglycidyl ether: gelatin G3;
- pentaerythrol glycidyl ether (pentaerythrol tetraglycidyl ether): gelatin G4.

The same procedure was then repeated to prepare composite materials obtained by adding, before drying, to still hot mass at 45 ° C, wood fibers, lignin sulfonate, calcium carbonate in quantities such as to obtain the following composition of the finished product (ie after drying): 18.1% Functionalized gelatin; 31.4% wood fiber; 14.8% ligninsulfonate; 35.7% calcium carbonate.

Three samples were prepared, using as a derivatizer I:
- polyethylene glycol diglycidyl ether (PEG-DGE): composite material M2 (comparison example);
- trimethylpropane triglycidyl ether: composite material M3;
- pentaerythrol glycidyl ether (pentaerythrol tetraglycidyl ether): composite material M4.

Gelatins G2, G3 and G4 were subjected to melting in water at room temperature, at 54° C and 105 ° C.

At 105 ° C, dices with 4 mm side of gelatin G2 were completely dissolved in 17 hours, while dices of the same size of G3 and G4 gelatins required more than 43 hours for complete dissolution.

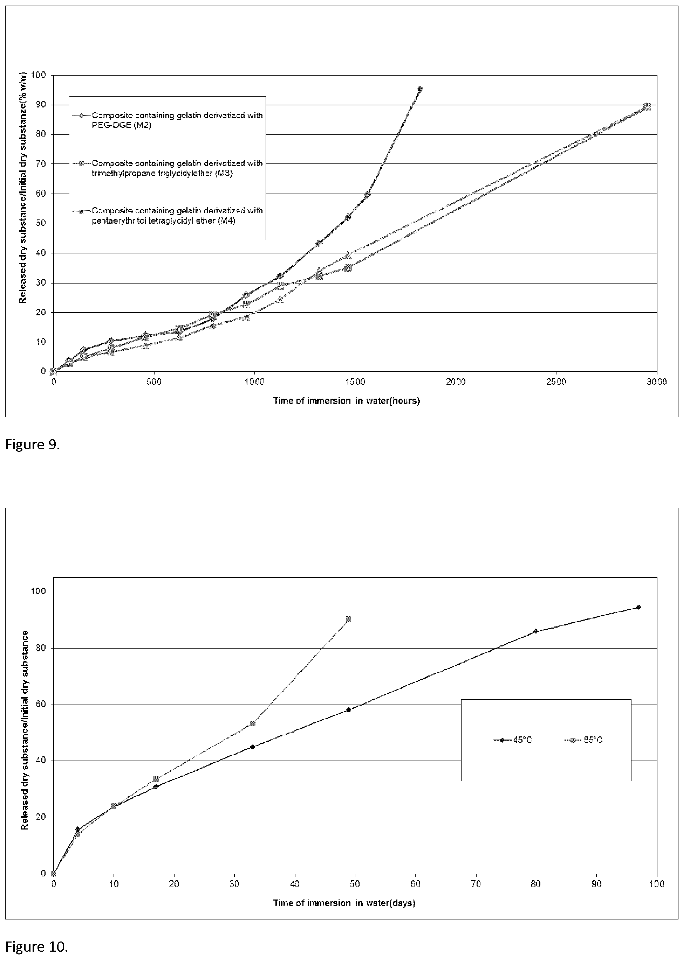

Figure 9 shows in a graph the amount of material released in water at 54 ° C of composite materials M2, M3 and M4 in the form of cylinders prepared by compression of the material into a mold having a radius of 60 mm and a height of 50 mm, which were allowed to dry at room temperature for 7 days and then in an oven at 105 ° C for 18 hours.

Figures 1 and 2 show that the materials of the present invention obtained from 140 Bloom gelatin are more stable in water. In addition, the addition of bases can be avoided since the water stability of the products of the present invention obtained at pH 7-8 is substantially comparable to that obtainable in the acidic environment.

The experiments carried out showed the possibility of preparing materials with improved stability allowing the use of derivatizers in smaller quantities.

According to the invention, materials having good water-stability can also be obtained even at low concentrations of the derivatizer compound, as shown in Figure 3 showing water stability at 54 ° C of gelatin with Bloom index 80 derivatized with different amounts of pentaerythrol tetraglycidyl ether.

Indeed, the derivatized gelatins according to the invention are characterized by good water stability even if the starting gelatin is of poor quality. In fact, gelatins with a Bloom index of less than 50 can be used to produce products with a month of storage at room temperature.

The derivatized gelatins according to the invention are characterized by an improved metal complexing ability compared to those obtainable according to the prior art, particularly with respect to iron. The iron affinity for derivatized gelatins according to the invention is highlighted by tests of iron absorption by functionalized gelatin that has been allowed to rest in iron sulfate solutions until concentration of 0.25% dry w/w is reached. (example 7)

The behavior of derivatized gelatins containing salts is illustrated in Figs. 4 and 5 showing the degradation and release of the element over time into water at 54 ° C for materials obtained from gelatin with Bloom index of 140 derivatized with PEG-DGE and pentaerythrolo tetraglycidyl ether .

The derivatized gelatins according to the invention are characterized by improved affinity for inorganic materials such as calcium carbonate. The mixtures obtainable, for example from a Bloom index gelatin with calcium carbonate, have a greatly improved stability in the case of materials prepared with pentaerythrol tetraglycidyl ether. In Figures 6 and 7, reporting water release at 54 ° C, it can be noted that while in the case of materials obtained with pentaerythrol tetraglycidyl ether there is a release similar to that obtainable without calcium carbonate, in the case of materials obtained with PEG - DGE the materials obtained with calcium carbonate are much less stable than calcium carbonate-free materials.

The addition of organic materials such as lignin sulfonate in the gelatins according to the present invention is capable of producing improved water stability over time. Composite materials including gelatin according to the present invention and vegetable flour and wood fiber are characterized by a high degree of stability, but with a last stage of rapid degradation. Such a characteristic can be exploited, for example, for the construction of floriculture containers that require a well-defined life time.

The derivatized gelatins according to the invention may also be used in combination with low hydrolysis degree (0-150) and / or high hydrolysis degree (150-500) which are released in short times for high solubility in water and the lack of specific interactions, as shown in Figure 7. By modulating the thickness of the produced products, it is possible to obtain good stability over time even after the release of protein hydrolysate. In fact, materials prepared with the same gelatins using the same percentage of derivatizer degrade to about 50% in about 100 days if they have 4-5 mm thickness and degrade to 50% in about 350 days if they have a thickness of 7-8 mm.

### Example 24a

467 g of water having a temperature of 45° C were added to 200 g of commercial animal gelatin for alimentary use having Bloom index 90. After dissolution, 14 g of pentaerythritol tetraglycidyl ether were added at 85 °C.

The mixture was allowed to react under stirring at a temperature of 85 ° C for 1,5 hours. The product, titled 116L was spread on special containers, allowed to rest until the next day, cut into dices of approximately 3mm side and dried at room temperature.

### Example 24b

467 g of water having a temperature of 45° C were added to 200 g of commercial animal gelatin for alimentary use having Bloom index 90. After dissolution, 14 g of pentaerythritol tetraglycidyl ether were added at 85 °C.

The mixture was allowed to react under stirring at a temperature of 45 ° C for 6 hours.

The product, titled 117L, was subsequently spread on special containers, allowed to rest until the next day, cut into dices of approximately 3mm side and dried at room temperature.

Samples of the dices obtained from product 116L and 117L were tested for water stability at 54°C.

Figure 10 shows in a graphic the percentage of released material with respect to the initial dry material of the two above mentioned products.

## Claims

1. A process for manufacturing derivatized proteic hydrolysates and/or derivatized gelatins, **characterized by** comprising: a step of reaction of a proteic hydrolysate, a gelatin and/or a mixture thereof, with a compound of formula I, thereby forming a reaction mixture: 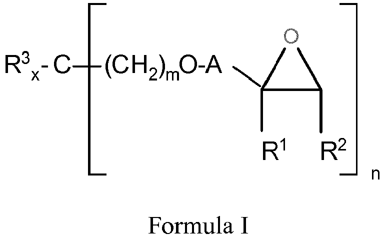
wherein: x is 0 or 1; m is an integer from 1 to 6; A is methylene or substituted methylene; R¹, R² and R³, independently of each other, are selected in the group consisting of hydrogen and C₁-C₆ saturated alkyls; and n is an integer from 3 to 4;
and wherein said step of reaction comprises heating said reaction mixture at a temperature of at least 40°C for at least 60 minutes.

2. A process according to the preceding claim, **characterized in that** said step of reaction is carried out in water at a pH higher than 5.

3. A process according to the previous claim, **characterized in that** said compound of formula I is pentaerythritol tetraglycidyl ether or trimethylolpropanglycidyl ether.

4. A process according to one of the previous claims, **characterized in that** it comprises a step of adding to said reaction mixture a substance selected in the group of fillers, reinforcing additives, lubricants, coloring agents, compacting agents, binding agents.

5. A process according to the previous claim, **characterized in that** said substance is selected in the group consisting of calcium carbonate, calcium sulfate, iron sulfate, potassium phosphate and their hydrates, lignosulfonates, vegetal flours, glycerol.

6. A process according to any of the previous claims, **characterized in that** it comprises a step of drying said derivatized proteic hydrolysates and/or derivatized gelatins at room temperature.

7. A process according to any of the previous claims, **characterized in that** it comprises a step of drying said derivatized proteic hydrolysates and/or derivatized gelatins at a temperature higher than 50°C.

8. A derivatized proteic hydrolysate and/or derivatized gelatin obtainable according to the process according to any of the previous claims.

9. A material or product being compostable and/or fertilizing and/or biostimulating and/or phytosanitary comprising a derivatized proteic hydrolysate and/or a derivatized gelatin according to the previous claim.

10. A material or product according to the previous claim comprising a derivatized proteic hydrolysate and/or a derivatized gelatin in an amount lower that 10% with respect to the weight of the material or product.

11. A material or product according to claim 9 or 10 in the form of grains, flakes, pellets, sheets, discs, pits, pots, strings, coated seeds, or microcapsules, optionally containing fertilizers.

## Patentansprüche

1. Ein Verfahren zur Herstellung derivatisierter Proteinhydrolysate und/oder derivatisierter Gelatinen, **gekennzeichnet durch**: einen Reaktionsschritt eines Proteinhydrolisats, einer Gelatine und/oder deren Mischung mit einer Verbindung mit der Formel I, wodurch eine Reaktionsmischung gebildet wird: 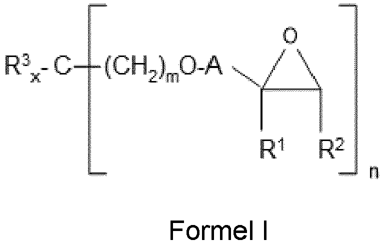
- wobei: x gleich 0 oder 1 ist; m ist eine ganze Zahl von 1 bis 6; A ist Methylen oder substituiertes Methylen; R¹, R² und R³ sind unabhängig voneinander ausgewählt aus der Gruppe bestehend aus Wasserstoff und C₁-C₆ gesättigten Alkylen; und n ist eine Zahl von 3 bis 4;
- und wobei der besagte Reaktionsschritt das Erhitzen der besagten Reaktionsmischung auf eine Temperatur von wenigstens 40°C für wenigstens 60 Minuten umfasst.

2. Ein Verfahren gemäß dem vorhergehenden Anspruch, **dadurch gekennzeichnet, dass** der besagte Reaktionsschritt in Wasser bei einem pH-Wert oberhalb von 5 durchgeführt wird.

3. Ein Verfahren gemäß dem vorhergehenden Anspruch, **dadurch gekennzeichnet, dass** die besagte Verbindung mit der Formel I Pentaerythrittetraglycidylether oder Trimethylolpropanglycidylether ist.

4. Ein Verfahren gemäß einem der vorhergehenden Ansprüche, **dadurch gekennzeichnet, dass** es einen Schritt der Zugabe einer Substanz zu der besagten Reaktionsmischung umfasst, die ausgewählt ist aus der Gruppe von Füllstoffen, Verstärkungsadditiven, Schmiermitteln, Farbstoffen, Verdichtungsmitteln, Bindemitteln.

5. Ein Verfahren gemäß dem vorhergehenden Anspruch, **dadurch gekennzeichnet, dass** die besagte Substanz ausgewählt ist aus der Gruppe bestehend aus Calciumcarbonat, Calciumsulfat, Eisensulfat, Kaliumphosphat und deren Hydraten, Lignosulfonaten, pflanzlichen Mehlen, Glyzerin.

6. Ein Verfahren gemäß einem der vorhergehenden Ansprüche, **dadurch gekennzeichnet, dass** es einen Schritt des Trocknens der besagten derivatisierten Proteinhydrolysate und/oder derivatisierten Gelatinen bei Raumtemperatur umfasst.

7. Ein Verfahren gemäß einem der vorhergehenden Ansprüche, **dadurch gekennzeichnet, dass** es einen Schritt des Trocknens der besagten derivatisierten Proteinhydrolysate und/oder derivatisierter Gelatinen bei einer Temperatur oberhalb von 50°C umfasst.

8. Ein derivatisiertes Proteinhydrolysat und/oder derivatisierte Gelatine, erhältlich nach dem Verfahren gemäß einem der vorhergehenden Ansprüche.

9. Ein Material oder Produkt, das kompostierbar ist und/oder düngend und/oder biostimulierend und/oder phytosanitär, umfassend ein derivatisiertes Proteinhydrolysat und/oder eine derivatisierte Gelatine gemäß dem vorhergehenden Anspruch.

10. Ein Material oder Produkt gemäß dem vorhergehenden Anspruch, umfassend ein derivatisiertes Proteinhydrolysat und/oder eine derivatisierte Gelatine in einer Menge von weniger als 10%, bezogen auf das Gewicht des Materials oder Produktes.

11. Ein Material oder Produkt gemäß Anspruch 9 oder 10 in der Form von Körnern, Flocken, Pellets, Blättern, Scheiben, Kernen, Gefäßen, Fäden, beschichteten Samen oder Mikrokapseln, optional einen Dünger enthaltend.

## Revendications

1. Procédé pour fabriquer des hydrolysats protéiques dérivatisés et/ou des gélatines dérivatisées, **caractérisé en ce qu'**il comprend : une étape de réaction d'un hydrolysat protéique, d'une gélatine et/ou d'un mélange de ceux-ci avec un composé de formule I, formant ainsi un mélange réactionnel : 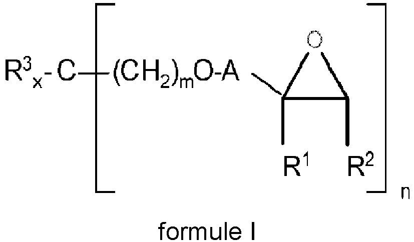
dans lequel : x vaut 0 ou 1 ; m est un entier de 1 à 6 ; A est le méthylène ou un méthylène substitué ; R¹, R² et R³, indépendamment les uns des autres, sont choisis dans l'ensemble constitué par l'hydrogène et les alkyles saturés en C₁ à C₆ ; et n est l'entier 3 ou 4 ;
et dans lequel ladite étape de réaction comprend le chauffage dudit mélange réactionnel à une température d'au moins 40°C pendant au moins 60 minutes.

2. Procédé selon la revendication précédente, **caractérisé en ce que** ladite étape de réaction est effectuée dans de l'eau à un pH supérieur à 5.

3. Procédé selon la revendication précédente, **caractérisé en ce que** ledit composé de formule I est l'éther tétraglycidylique de pentaérythritol ou l'éther glycidylique de triméthylolpropane.

4. Procédé selon l'une des revendications précédentes, **caractérisé en ce qu'**il comprend une étape d'addition audit mélange réactionnel d'une substance choisie dans l'ensemble comprenant les charges, les additifs de renforcement, les lubrifiants, les agents colorants, les agents de compactage, les agents liants.

5. Procédé selon la revendication précédente, **caractérisé en ce que** ladite substance est choisie dans l'ensemble constitué par le carbonate de calcium, le sulfate de calcium, le sulfate de fer, le phosphate de potassium et leurs hydrates, les ligninesulfonates, les farines végétales, le glycérol.

6. Procédé selon l'une quelconque des revendications précédentes, **caractérisé en ce qu'**il comprend une étape de séchage desdits hydrolysats protéiques dérivatisés et/ou gélatines dérivatisées à la température ambiante.

7. Procédé selon l'une quelconque des revendications précédentes, **caractérisé en ce qu'**il comprend une étape de séchage desdits hydrolysats protéiques dérivatisés et/ou gélatines dérivatisées à une température supérieure à 50°C.

8. Hydrolysat protéique dérivatisé et/ou gélatine dérivatisée pouvant être obtenus conformément au procédé selon l'une quelconque des revendications précédentes.

9. Matériau ou produit qui est compostable et/ou fertilisant et/ou biostimulant et/ou phytosanitaire, comprenant un hydrolysat protéique dérivatisé et/ou une gélatine dérivatisée selon la revendication précédente.

10. Matériau ou produit selon la revendication précédente, comprenant un hydrolysat protéique dérivatisé et/ou une gélatine dérivatisée en une quantité inférieure à 10 % par rapport au poids du matériau ou produit.

11. Matériau ou produit selon la revendication 9 ou 10, sous la forme de grains, copeaux, pastilles, feuilles, disques, fosses, pots, ficelles, graines enrobées, ou microcapsules, contenant éventuellement des fertilisants.
